# EUROPEAN PATENT APPLICATION

(11) **EP 3 671 334 A1**
(43) Date of publication of application: **24.06.2020**
(21) Application number: 18845682.6
(22) Date of filing: 23.04.2018
(51) Int. Cl.: G02F 1/1337

(54) **DISPLAY SUBSTRATE, DISPLAY DEVICE AND METHOD FOR MANUFACTURING DISPLAY SUBSTRATE**

(30) Priority: 18.08.2017 CN 201710712077
(71) Applicant: BOE Technology Group Co., Ltd., Beijing 100015 (CN); Chongqing BOE Optoelectronics Technology Co., Ltd., Chongqing 400714 (CN)
(72) Inventor: PENG, Bin, Beijing 100176 (CN); FENG, Yongan, Beijing 100176 (CN); WEI, Chengming, Beijing 100176 (CN); XU, Zhijun, Beijing 100176 (CN); YU, Daoping, Beijing 100176 (CN)
(74) Representative: Klunker IP Patentanwälte PartG mbB
(86) International application number: PCT/CN2018/084102
(87) International publication number: WO 2019/033778

(57) **Abstract**

Provided are a display substrate, a display device and a method for manufacturing a display substrate. The display substrate (10) comprises a base substrate (4) and a plurality of spacers arranged on the base substrate (4), wherein an end, away from the base substrate (4), of each of the plurality of the spacers is provided with an inclined surface; and the directions of inclination of the inclined surfaces of the plurality of the spacers are consistent. When rubbing alignment is performed on an alignment layer on the display substrate, poor display caused by relatively significant deformation of fibers on a surface of a rubbing cloth when passing through the spacers can be avoided.

## Description

The application claims priority to the Chinese patent application No. 201710712077.5, filed on August 18, 2017, the entire disclosure of which is incorporated herein by reference as part of the present application.

### TECHNICAL FIELD

At least one embodiment of the present disclosure relates to a display substrate, a display device and a manufacturing method of a display substrate.

### BACKGROUND

In a field of liquid crystal display technology, a manufacturing process of a liquid crystal cell includes an alignment process performed on liquid crystals. The alignment process is that an alignment layer is processed by using a physical or chemical method to have a function of aligning liquid crystal molecules in a same direction with a certain pre-tilt angle. Friction alignment is a common physical method for aligning liquid crystals. Generally, in a friction alignment process, directional grooves with a certain depth are formed on a surface of the alignment layer by using a friction cloth which has been specially treated and is provided on an outside of a roller, and alignment of the liquid crystal molecules is achieved by a interaction force between the alignment layer and the liquid crystal molecules.

In the friction alignment process, if depths of the grooves formed in some regions of the alignment layer are less than depths of the grooves formed in other regions of the alignment layer or no groove is formed in some regions of the alignment layer, then the liquid molecules in these regions cannot be aligned as required, and then a phenomenon of light leakage occurs easily, which affects a display quality of a liquid crystal display device.

### SUMMARY

At least one embodiment of the present disclosure provides a display substrate, and the display substrate comprises a base substrate and a plurality of spacers on the base substrate; each of the plurality of spacers has an end facing away from the base substrate, and the end is provided with a sloping surface; and sloping directions of the sloping surfaces of the plurality of spacers are consistent with each other.

For example, in the display substrate provided by at least an embodiment of the present disclosure, at least one of the plurality of spacers is in a shape of a prism.

For example, in the display substrate provided by at least an embodiment of the present disclosure, the sloping surface of each of the plurality of spacers is a plane.

For example, the display substrate provided by at least an embodiment of the present disclosure further comprises an alignment layer on the base substrate and covering the base substrate and the plurality of spacers.

For example, in the display substrate provided by at least an embodiment of the present disclosure, along a friction alignment direction of the alignment layer, a width, which is in a direction perpendicular to the friction alignment direction, of at least one end of the sloping surface decreases gradually.

For example, in the display substrate provided by at least an embodiment of the present disclosure, a material of the plurality of spacers comprises a photoresist.

For example, in the display substrate provided by at least an embodiment of the present disclosure, the plurality of spacers comprise a plurality of main spacers and a plurality of auxiliary spacers, and a height of each of the plurality of auxiliary spacers is less than a height of each of the plurality of main spacers.

For example, in the display substrate provided by at least an embodiment of the present disclosure, the heights of the plurality of main spacers are equal to each other, and the heights of the plurality of auxiliary spacers are equal to each other.

At least one embodiment of the present disclosure further provides a display device comprising any one of the display substrates provided by embodiments of the present disclosure and an opposite substrate, the display substrate and the opposite substrate are opposite to each other, so that the plurality of spacers are sandwiched between the display substrate and the opposite substrate.

For example, in the display device provided by at least an embodiment of the present disclosure, the display substrate is a color filter substrate or an array substrate.

At least one embodiment of the present disclosure further provides a manufacturing method of a display substrate, and the manufacturing method of the display substrate comprises: providing a base substrate; and forming a plurality of spacers on the base substrate; each of the plurality of spacers has an end facing away from the base substrate, and the end is provided with a sloping surface; sloping directions of the sloping surfaces of the plurality of spacers are consistent with each other.

For example, in the manufacturing method of the display substrate provided by at least an embodiment of the present disclosure, the forming the plurality of spacers comprises: forming a photoresist layer on the base substrate; performing a gray-tone photolithography process, in which an exposure intensity in a partial exposure region corresponding to each of the plurality of spacers decreases gradually or increases gradually along a friction alignment direction of an alignment layer.

For example, in the manufacturing method of the display substrate provided by at least an embodiment of the present disclosure, the plurality of spacers are formed by using the photoresist layer.

For example, in the manufacturing method of the display substrate provided by at least one embodiment of the present disclosure, the plurality of spacers comprise a plurality of main spacers and a plurality of auxiliary spacers, the partial exposure region comprises a first partial exposure region corresponding to each of the main spacers and a second partial exposure region corresponding to each of the auxiliary spacers, and an exposure intensity in the first partial exposure region is different from an exposure intensity in the second partial exposure region.

For example, the manufacturing method of the display substrate provided by at least one embodiment of the present disclosure further comprises: forming an alignment layer covering the base substrate and the spacers; and performing a friction alignment process on the alignment layer, in which a moving direction of the plurality of spacers relative to a friction device is same as the friction alignment direction of the alignment layer.

### BRIEF DESCRIPTION OF THE DRAWINGS

In order to clearly illustrate the technical solution of the embodiments of the disclosure, the drawings of the embodiments will be briefly described in the following; it is obvious that the described drawings are only related to some embodiments of the disclosure and thus are not limitative of the disclosure.
Fig. 1 is a partial plane schematic diagram of a region provided with spacers of a display substrate;
Fig. 2 is a cross-sectional schematic diagram taken along a line I-I' illustrated in Fig. 1;
Fig. 3 is a partial plane schematic diagram of a region provided with spacers of a display substrate provided by at least one embodiment of the present disclosure;
Fig. 4 is a cross-sectional schematic diagram taken along a line A-A' illustrated in Fig. 3;
Fig. 5 is another cross-sectional schematic diagram taken along the line A-A' illustrated in Fig. 3;
Fig. 6 is a plane schematic diagram of the display substrate provided by at least one embodiment of the present disclosure;
Fig. 7 is a cross-sectional schematic diagram taken along a line E-E' illustrated in Fig. 6;
Fig. 8 is a cross-sectional schematic diagram of a display device provided by at least one embodiment of the present disclosure; and
Fig. 9A- Fig.9F are schematic diagrams of a manufacturing method of a display substrate provided by at least one embodiment of the present disclosure.

### Reference Numerals

1 - substrate; 2 - alignment layer; 3 - columnar spacer; 4 - base substrate; 5 - columnar spacer; 501 - main spacer; 502 - auxiliary spacer; 6 - black matrix; 7 - opposite substrate; 8 - photoresist layer; 801 - main spacer region; 802 - auxiliary spacer region; 9 - mask; 901 - first partial exposure region; 902 - second partial exposure region; 903/904/905 - portions of the mask except partial exposure region; 10 - display substrate; 11 - alignment layer; 12 - friction cloth; 13 - high-speed rotary roller; 100 - display device.

### DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment (s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount or importance, but distinguish various components. Also, the terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "left," "right" and the like are only used to indicate relative position relationship, and when the position of the object which is described is changed, the relative position relationship may be changed accordingly.

The figures in embodiments of the present disclosure are not drawn according to actual proportions or scales. A number of main spacers and a number of auxiliary spacers are not limited to amounts illustrated in the figures, specific sizes and specific numbers of the main spacers and the auxiliary spacers may be determined according to actual requirements, and the figures of the embodiments of the present disclosure are only schematic views.

A base substrate in the embodiments of the present disclosure for example comprises other layers or patterns except the spacers, for example, the base substrate further comprises a common electrode layer, a pixel electrode layer, a gate electrode, a gate line, a drain electrode, a source electrode, a data line, a gate insulation layer and a passivation layer, etc. or further comprises a color filter layer and a black matrix, etc. The figures only illustrate structures related to the columnar spacers, and other structures may be referred to the common techniques.

In order to describe conveniently, a friction alignment direction of an alignment layer in the present disclosure means that a moving direction of the base substrate relative to a friction device used in a friction alignment process, for example, the friction alignment direction is parallel to the base substrate. For example, a height, which is relative to the base substrate, of a sloping surface of each of the spacers decreases along the friction alignment direction.

It should be noted that the feature "sloping directions of the sloping surfaces of the plurality of spacers are consistent with each other" means included angels between the sloping surfaces of the plurality of spacers and the base substrate are all acute angles or are all obtuse angles, and it should not be interpreted that the included angels between the sloping surfaces of the plurality of spacers and the base substrate are only equal with each other.

In an liquid crystal display device, generally, an array substrate or an opposite substrate (for example, a color filter substrate) is provided with spacers used to support the array substrate and the opposite substrate which are opposite to each other and bonded together to form a liquid crystal cell and playing a role of maintaining a stability of a thickness of the liquid crystal cell. An alignment layer is generally formed after forming the spacers and is on the base substrate provided with the spacers. In a case where a friction alignment technology is adopted (for example, a friction alignment process is performed using a friction cloth), a material and properties of the friction cloth are important factors in the friction alignment process. Factors such as uniformity, elastic resilience ability, diameters and densities of fibers or fluffs on a surface of the friction cloth, a friction force and the like have important influence on an effect of the friction alignment. The better the uniformity of the surface of the friction cloth and the elastic resilience ability is, the better the effect of the friction alignment is.

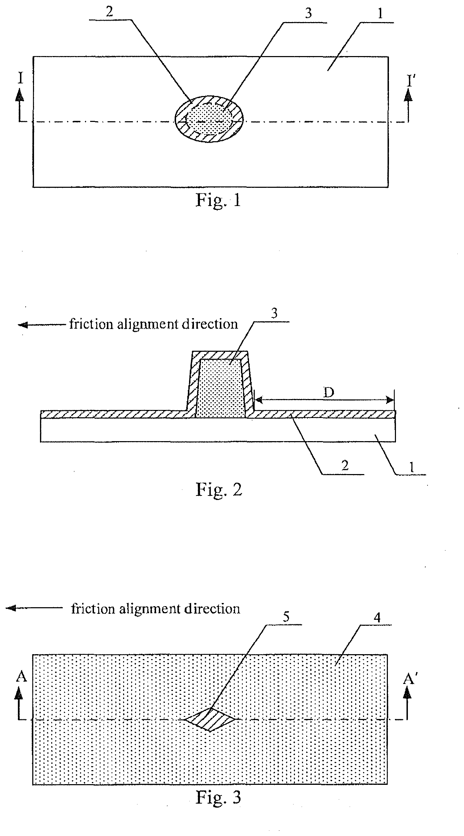

Fig. 1 is a partial plane schematic diagram of a region provided with spacers of a display substrate, Fig. 2 is a cross-sectional schematic diagram taken along a line I-I' illustrated in Fig. 1. As illustrated in Fig. 1 and Fig. 2, a moving direction, which is relative to a base substrate, of a friction cloth is a friction direction illustrated in Fig. 2, and an alignment process is performed on an alignment layer 2.

In Fig. 2, upon the friction cloth contacts a spacer 3, because a shape of the spacer 3 is columnar, the spacer 3 blocks the fibers or the fluffs on the surface of the friction cloth. A shape of a cross-section surface of the spacer 3 is elliptical or circular (not shown in the figure) and the cross-section surface is parallel to the base substrate 1, and such a structure of the spacer 3 easily leads to a large deformation, which occurs after the friction cloth passes through the spacer 3 in the columnar shape, of the fibers or the fluffs on the surface of the friction cloth, which thus leads to a long recovery time of the fibers or the fluffs, thus a region, which is behind and near the spacer 3, of the alignment layer 2 is not rubbed normally, thus a weak friction region is formed behind and near the spacer 3. A region D in Fig. 2 is not rubbed normally, thus a portion, which is in the region D, of the alignment layer is not be rubbed or the grooves formed in the portion, which is in the region D, of the alignment layer are shallower, which thus results in a poor alignment effect of the liquid crystal molecules corresponding to the region D, thus included angles between the liquid crystal molecules and the friction direction are larger. If the region D overlaps with a pixel region, a phenomenon of light leakage occurs, which causes a poor display effect of the display device adopting the display substrate in a dark state and affects a quality of a displayed image. In a case where the above-mentioned phenomenon of abnormal friction is serious, bright spots exist near the spacers in the pixel region which has a function of display or a defect of light leakage of a display panel occurs.

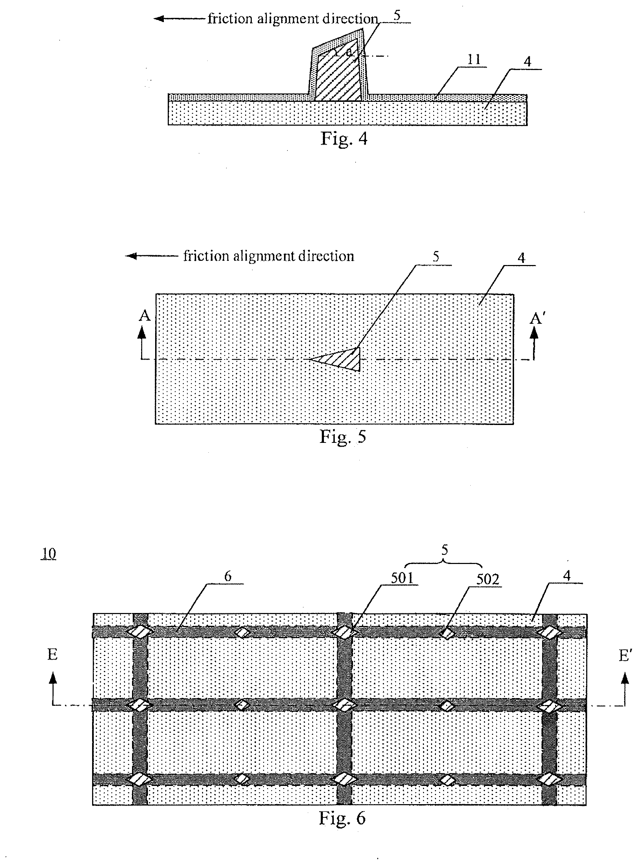

At least one embodiment of the present disclosure provides a display substrate, and the display substrate comprises: a base substrate and a plurality of spacers on the base substrate; an end, which faces away from the base substrate, of each of the plurality of spacers is provided with a sloping surface; sloping directions of the sloping surfaces of the plurality of spacers are consistent with each other. Exemplary, Fig. 3 is a partial plane schematic diagram of a region provided with the spacers of the display substrate provided by at least one embodiment of the present disclosure, Fig. 4 is a cross-sectional schematic diagram taken along a line A-A' illustrated in Fig. 3, Fig. 5 is another cross-sectional schematic diagram taken along the line A-A' illustrated in Fig. 3.

Exemplary, as illustrated in Fig. 3 and Fig. 4, for example, the friction alignment direction of the alignment layer is a direction parallel to an edge of the base substrate 4 and from right to left. For example, the spacers are columnar spacers 5. The columnar spacers 5 are on the base substrate 4, and an upper surface of each of the columnar spacers 5 is the sloping surface. An included angle *a* is between the sloping surface and the base substrate, and the included angel *a* is an acute angle for example. An alignment layer 11 is coated on the base substrate 4 provided with the columnar spacers 5, and the alignment layer 11 covers the columnar spacers 5 and the base substrate 4. The end, which faces away from the base substrate 4, of each of the columnar spacers 5 is provided with the sloping surface. Along the friction alignment direction of the alignment layer, a height, which is relative to the base substrate 4, of the sloping surface of each of the spacers decrease gradually.

For example, the alignment layer 11 is made of an organic material, such as polyimide (PI), etc.. During the friction alignment process is performed on the alignment layer 11, the base substrate 4 moves relative to a friction device along the friction alignment direction illustrated in Fig. 4. For example, a high-speed rotary roller wrapped by the friction cloth with a special treated surface is used as the friction device for friction. A position of the high-speed rotary roller remains unchanged, the base substrate provided with the columnar spacers 5 and the alignment layer 11 is conveyed to the friction device in the friction alignment direction of the alignment layer, the alignment layer 11 mechanically contacts the surface of the friction cloth and is rubbed by the surface of the friction cloth, thus directional grooves are carved on the surface of the alignment layer 11.

In Fig. 4, during the friction cloth contacts the columnar spacers 5, the surface of the friction cloth slides over the sloping surface of each of the columnar spacer 5 along the friction direction. Because the end, which faces away from the base substrate 4, of each of the columnar spacers 5 is provided with the sloping surface, a smooth transition is achieved during the friction cloth slides over the upper surface of each of the columnar spacers 5 along the friction direction illustrated in the figure, so that the deformation of the fibers on the surface of the friction cloth is small and the shape recovery time of the fibers is short. Thus, when the friction cloth which have contacted the alignment layer 11 covering the columnar spacers 5 rotates to the region D behind the columnar spacers 5 and contacts the region D, the fibers on the surface of the friction cloth return to a relatively regular state in time, thus the portion of the alignment layer 11 in the region D is normally rubbed by the fibers. In this way, the friction effect in the region D is not affected, a large deformation of the fibers on the surface of the friction cloth after being blocked by the columnar spacers 5 is avoided, thus a problem that the deformed fibers rotating to the region D do not return to the regular state so that at least a portion of the region D is not rubbed or friction traces formed in the region D are shallow is avoided, thus a problem that a bad initial alignment of the liquid crystal molecules at this portion of the region D is avoided, and thus the poor display effect of the display device in the dark state caused by the bad initial alignment of the liquid crystal molecules is avoided, and thus the quality of the display image is not affected.

For example, at least one of the columnar spacers 5 is in a shape of a prism. Of course, at least one of the columnar spacers 5 for example is in a shape of a circular column, an elliptical column, a square column, etc. During the friction alignment process is performed using the friction cloth, compared with the spacer in the shape of the circular column, the spacer in the shape of the prism is more beneficial to achieve the smooth transition of the friction cloth contacting the end surface of the columnar spacer, which reduces the deformation of the friction cloth and reduces the recovery time of the fibers on the surface of the friction cloth, thus the above-mentioned defects related to the friction are reduced.

For example, the sloping surface of each of the plurality of columnar spacers 5 is a plane or substantially is a plane; of course, the sloping surface of each of the plurality of columnar spacers 5 for example is a curved surface. During the surface of the friction cloth slides over the sloping surface of at least one of the columnar spacers 5, compared with a case where the sloping surface is a protruding curved surface with a certain radian, a case where the sloping surface is the plane is more beneficial to reduce the deformation of the fibers on the surface of friction cloth and reduce the recovery time taken by returning to the regular state of the fibers, thus the above-mentioned defects related to the friction alignment are reduced.

For example, along the friction alignment direction of the alignment layer, a width, which is in a direction perpendicular to the friction alignment direction, of at least one end of the sloping surface decreases gradually. Exemplary, as illustrated in Fig. 3, the sloping surface or the cross-sectional surface of each of the columnar spacers 5 is in a shape of a rhombus; and along the friction alignment direction of the alignment layer, the width, which is in the direction perpendicular to the friction alignment direction, of a left end of the rhombus decreases gradually, and the width of the rhombus decreases to zero at a vertex of the left end of the rhombus. In this way, the friction is performed along the friction direction illustrated in Fig. 3; during the friction cloth slides over the sloping surface of at least one of the columnar spacers 5, compared with the sloping surface is in a shape of a round, the sloping surface in the shape of the rhombus reduces a contact area of the surface of the friction cloth and the at least one of the columnar spacers 5, thus an area of a region, where the fibers are deformed, of the surface of the friction cloth is reduced, which is beneficial to reduce the above-mentioned defects related to the friction alignment.

In the embodiment illustrated in Fig. 3, a longer diagonal of the rhombic cross-sectional surface of each of the columnar spacers is along the friction alignment direction of the alignment layer, which is beneficial to further reduce the area of the region, where the fibers are deformed, of the surface of the friction cloth during the friction cloth slides over the sloping surface of at least one of the columnar spacers 5, thus the above-mentioned defects related to the friction alignment are reduced.

For example, exemplary, as illustrated in Fig. 5, the sloping surface or the cross-sectional surface of each of the columnar spacers 5 for example in a shape of a triangle, which is an isosceles triangle in Fig. 5. A bottom edge of the isosceles triangle is perpendicular to the frictional alignment direction of the alignment layer; and along a direction from the bottom edge to a vertex opposite to the bottom edge, the width, which is in the direction perpendicular to the friction alignment direction, of the triangle decreases gradually. The embodiment illustrated in Fig. 5 achieves the effects similar to that of the embodiment illustrated in Fig. 3. Of course, the above-mentioned triangle is not limited to the isosceles triangle, and a case where any edge of the triangle is perpendicular to the friction alignment direction of the alignment layer achieves a similar effect.

It should be note that the sloping surface of the at least one of the columnar spacers is not only limited to the shapes in the above embodiments, it also may be other shapes except the rhombus and the triangle, and no limitation is imposed to this in the embodiments of the present disclosure.

Above is a description of the local structure and technical effect of the display substrate with the region of the spacer provided by at least one embodiment of the present disclosure. An overall structure of the display substrate provided by at least one embodiment of the present disclosure is introduced in the following.

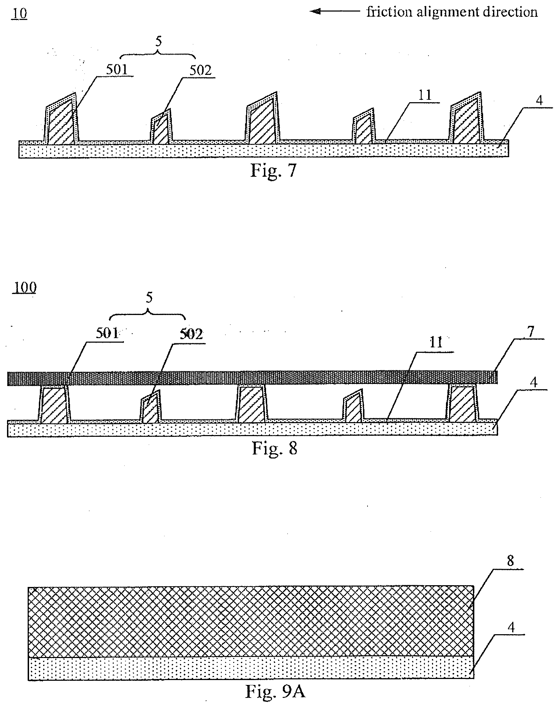

Fig. 6 is a plane schematic diagram of the display substrate provided by at least one embodiment of the present disclosure, and Fig. 7 is a cross-sectional schematic diagram taken along a line E-E' illustrated in Fig. 6.

As illustrated in Fig. 6 and Fig. 7, the plurality of columnar spacers 5 on the base substrate 4 comprises a plurality of main spacers 501 and a plurality of auxiliary spacers 502. The alignment layer 11 is coated on the base substrate 4 and covers the base substrate 4, the plurality of main spacers 501 and the plurality of auxiliary spacers 502. The alignment layer 11 comprises the grooves formed by the friction along the friction direction. A height of each of the plurality of auxiliary spacers 502 is less than a height of each of the plurality of main spacers 501. After the liquid crystal cell is formed by the display substrate 10, under normal conditions, the main spacer 501 supports an opposite substrate opposite to the display substrate 10, so that the thickness of the liquid crystal cell is maintained. In a case where the columnar spacers 5 are pressed by an external force, the plurality of auxiliary spacers 502 contact the opposite substrate opposite to the display substrate 10 to further produce a support force, which generates a supporting function to prevent a further decrease of the thickness of the liquid crystal cell.

For example, heights of the plurality of main spacers 501 are equal to each other and heights of the plurality of auxiliary spacers 502 are equal to each other, which is beneficial to provide a uniform supporting force to all parts of the liquid crystal cell, thus a uniform thickness of all parts of the liquid crystal cell is maintained.

For example, the plurality of main spacers 501 and the plurality of auxiliary spacers 502 are arranged in an array according to a certain arrangement rule and a certain distribution density. As illustrated in Fig. 6, the plurality of main spacers 501 and the plurality of auxiliary spacers 502 are arranged at positions at which the black matrix 6 is provided to minimize influence of a poor alignment of the alignment layer 11 near the columnar spacers 5 on display in the pixel region. The plurality of main spacers 501 and the plurality of auxiliary spacers 502 are arranged alternately.

For example, as illustrated in Fig. 7, a shape of each of the plurality of main spacers 501 and a shape of each of the plurality of auxiliary spacers 502 may be referred to the description in the embodiments illustrated in Fig. 3 - Fig. 5, and the shapes of the columnar spacers illustrated in Fig. 3 - Fig. 5 are beneficial to reduce the defects related to the friction alignment of the region, which is behind each of the spacers along the friction alignment direction, of the alignment layer 11.

For example, as illustrated in Fig. 7, the sloping direction of each of the plurality of main spacers 501 is same with the sloping direction of each of the plurality of auxiliary spacers 502, that is, the above-mentioned included angels *a* between the sloping surfaces of the spacers and the base substrate are equal with each other, which is beneficial to obtain an uniform effect of friction alignment during the friction alignment process.

For example, a material of the columnar spacers 5 comprises a photoresist, such as a positive photoresist or a negative photoresist. A method in which a required shape of the spacers is obtained by exposure and development is considered, thus an etching step is omitted and a manufacturing process of the columnar spacers 5 is simplified.

It should be noted that the display substrate 10 may be a color filter substrate or an array substrate, that is, the plurality of columnar spacers 5 are on the color filter substrate, or the plurality of columnar spacers 5 are on the array substrate. The figures are only schematic diagrams highlighting the structures related to the columnar spacers, and other specific components constituting the color filter substrate or the array substrate may refer to common techniques in the art.

At least one embodiment of the present disclosure further provides a display device comprising any one of the display substrates mentioned above, and the display device further comprises an opposite substrate, in which the opposite substrate is opposite to the display substrate, so that the spacers (for example, the columnar spacers) are sandwiched between the display substrate and the opposite substrate. The alignment layer of the display device provided by at least one embodiment of the present disclosure has a little weak friction region near each of the spacers, which avoids or reduces the above-mentioned defects related to the poor friction in the region near each of the spacers.

Exemplary, Fig. 8 is a cross-sectional schematic diagram of the display device provided by at least one embodiment of the present disclosure. As illustrated in Fig. 8,the display device 100 comprises the display substrate 10 and an opposite substrate 7 opposite to the display substrate 10, so that the columnar spacers 5 are sandwiched between the opposite substrate 7and the display substrate 10. The alignment layer 11 on the display substrate 10 comprises the grooves formed by the friction along the above-mentioned friction direction. At a beginning of the formation of the display device 100, an upper surface of the plurality of main spacers 501 contacts the opposite substrate 7 to support the opposite substrate 7 and maintain a distance between the display substrate 10 and the opposite substrate 7 (the thickness of the liquid crystal cell).

For example, the plurality of main spacers 501 are compressed by a certain percentage, so that an elastic force produced by the compression of the plurality of main spacers 501 prevent gravity Mura or vacuum bubbles within a certain temperature range. At a beginning of the formation of the display device 100, the plurality of auxiliary spacers 502 do not contact the opposite substrate 7 and are used to support the opposite substrate 7 when being compressed. For example, in a case where the temperature is lower than the lower limit of the above temperature range, a volume of the liquid crystal shrinks and the plurality of main spacers 501 will be further compressed. At this time, the plurality of auxiliary spacers 502 begin to contact the opposite substrate 7 to generate the support force to prevent the further decrease of the thickness of the liquid crystal cell.

It should be noted that the display substrate 10 may be a color filter substrate or an array substrate, correspondingly, the opposite substrate 7 may be the array substrate or the color filter substrate. The columnar spacers 5 may be on the color filter substrate or on the array substrate, and those skilled in the art may choose and design according to actual requirements.

It should be noted that the embodiment illustrated in Fig. 8 only relates to structures related to the spacers in the display device, and other structures may be referred to common techniques.

At least one embodiment of the present disclosure further provides a manufacturing method of a display substrate, which comprises providing a base substrate and forming a plurality of spacers on the base substrate, in which an end, which faces away from the base substrate, of each of the plurality of spacers is provided with a sloping surface, and sloping directions of the sloping surfaces of the plurality of spacers are consistent with each other.

For example, the forming the plurality of spacers comprises forming a photoresist layer on the base substrate and performing a gray-tone photolithography process. During the gray-tone photolithography process, an exposure intensity in a partial exposure region corresponding to each of the spacers decreases gradually or increases gradually along the friction alignment direction of the alignment layer.

For example, the main spacers and the auxiliary spacers which are described in the above embodiment are formed at a same time. The partial exposure region comprises a first partial exposure region corresponding to each of the main spacers and a second partial exposure region corresponding to each of the auxiliary spacers, and an exposure intensity in the first partial exposure region is different from an exposure intensity in the second partial exposure region.

For example, both the main spacers and the auxiliary spacers are columnar spacers.

Exemplary, Fig. 9A- Fig.9F are schematic diagrams of the manufacturing method of the display substrate provided by at least one embodiment of the present disclosure. As illustrated in Fig. 9A, the base substrate 4 is provided, and the photoresist layer 8 is formed on the base substrate 4. For example, a fine blade coating method is used to form the photoresist layer 8, which not only meets a requirement of a production efficiency, but also improves a uniformity of a thickness of the photoresist layer 8 with a large area. Of course, the photoresist layer 8 may be formed by other coating methods such as spin coating method, a method of a combination of the blade coating and the spin coating, etc., and no limitation is imposed to this in the embodiments of the present disclosure. A material of the photoresist layer 8 is a positive photoresist or a negative photoresist. In this way, the main spacers and the auxiliary spacers are formed by using the photoresist layer 8.

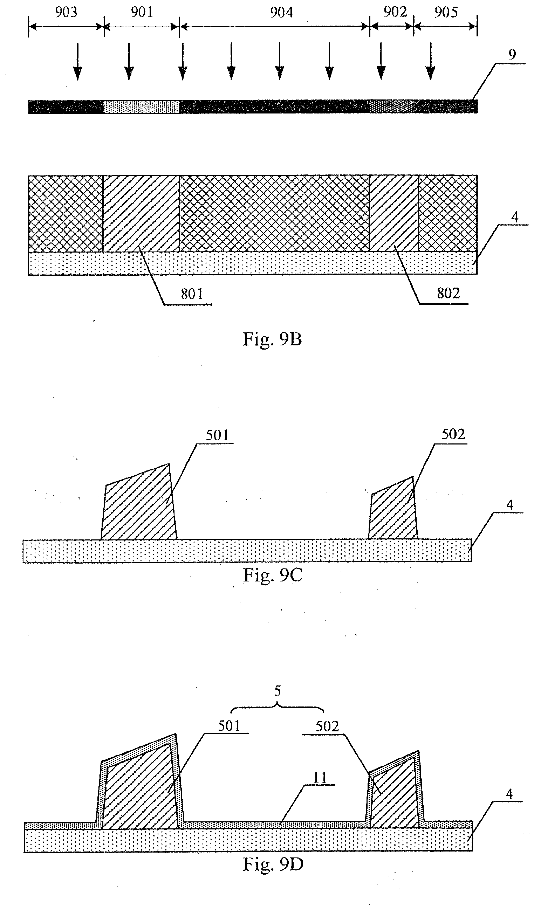

As illustrated in Fig. 9B, an exposure step of the gray-tone photolithography process is performed. A gray mask 9 or a halftone mask 9 comprising the partial exposure region and a full exposure region or a shading region is used in the exposure step. A portion of the mask 9 corresponding to a main spacer region 801 of the photoresist layer 8 is the first partial exposure region 901, and a portion of the mask 9 corresponding to an auxiliary spacer region 802 of the photoresist layer 8 is the second partial exposure region 902. The first partial exposure region 901 and the second partial exposure region 902 are designed with a translucent film, a grating structure or a combination of the translucent film and the grating structure to control the exposure intensity of the corresponding region where the main spacers are formed and the exposure intensity of the corresponding region where the auxiliary spacers are formed. Moreover, the exposure intensity in the first partial exposure region 901 is different from the exposure intensity in the second partial exposure region 902.

For example, in a case where the material of the photoresist layer 8 is the negative photoresist, the exposure intensity of the first partial exposure region 901 is higher than that of the second partial exposure region 902, so that the height of each of the plurality of main spacers is larger than that of each of the plurality of auxiliary spacers. Moreover, both the exposure intensity of the first partial exposure region 902 and the exposure intensity of the second partial exposure region 902 gradually increase along the friction alignment direction of the alignment layer, so that the sloping surface is formed at the end, which faces away from the base substrate, of each of the formed spacers. Portions 903/904/905 of the mask 9 except the partial exposure regions are all shading regions.

For example, in a case where the material of the photoresist layer 8 is the positive photoresist, the exposure intensity of the first partial exposure region 901 is lower than that of the second partial exposure region 902, so that the height of each of the plurality of main spacers is larger than that of each of the plurality of auxiliary spacers. Moreover, both the exposure intensity of the first partial exposure region 901 and the exposure intensity of the second partial exposure region 902 gradually decrease along the friction alignment direction of the alignment layer, so that the sloping surface is formed at the end, which faces away from the base substrate, of each of the formed spacers. Portions 903/904/905 of the mask 9 except the partial exposure regions are all full exposure regions.

For example, exposure conditions of the first partial exposure regions 901 respectively corresponding to the main spacers are same, and exposure conditions of the second partial exposure regions 902 respectively corresponding to the auxiliary spacers are same, so that all the main spacers are same with each other and all the auxiliary spacers are same with each other. In this way, on the one hand, it is beneficial to achieve a more uniform friction alignment effect, on the other hand, it is beneficial to provide a uniform support for the opposite substrate opposite to the display substrate 10, thus the stability of the thickness of the liquid crystal cell is maintained better.

After the above-mentioned exposure step, a development process is performed. For example, a developer is sprayed to the photoresist layer 8 by a spraying method. After a reaction of the developer and the photoresist layer 8, the main spacers 501 and the auxiliary spacers 502 which are illustrated in Fig. 9C are formed. The height of each of the plurality of main spacers 501 is greater than that of each of the plurality of auxiliary spacers 502, the sloping surface is formed at the end, which faces away from the base substrate, of each of the plurality of main spacers 501 and each of the plurality of auxiliary spacers 502, and the sloping directions of the sloping surfaces of the plurality of spacers are consistent with each other.

For example, the manufacturing method of the display substrate further comprises: forming an alignment layer covering the base substrate and the spacers and performing a friction alignment process on the alignment layer. The alignment layer for example is obtained by coating a layer of alignment liquid and curing the layer of the alignment liquid, and a moving direction of the spacers relative to a friction device is same as the friction alignment direction of the alignment layer.

As illustrated in Fig. 9D, the alignment layer 11 is formed on the base substrate 4 provided with the columnar spacers 5, and the method of forming the alignment layer 11 may refer to the above-mentioned methods of forming the photoresist layer 8. A material of the alignment layer 11 for example is a polymer with an alignment function, which makes the liquid crystal molecules to arrange regularly after being rubbed. For example, the material of the alignment layer 11 comprises polystyrene or polyimide, etc. Polyimide has a strong alignment effect on the liquid crystal molecules and a high stability. However, the types of materials listed above are only exemplary embodiments, and the materials of the alignment layer in the embodiments of the present disclosure are not limited to the types listed above, which are not limited by the embodiments of the present disclosure.

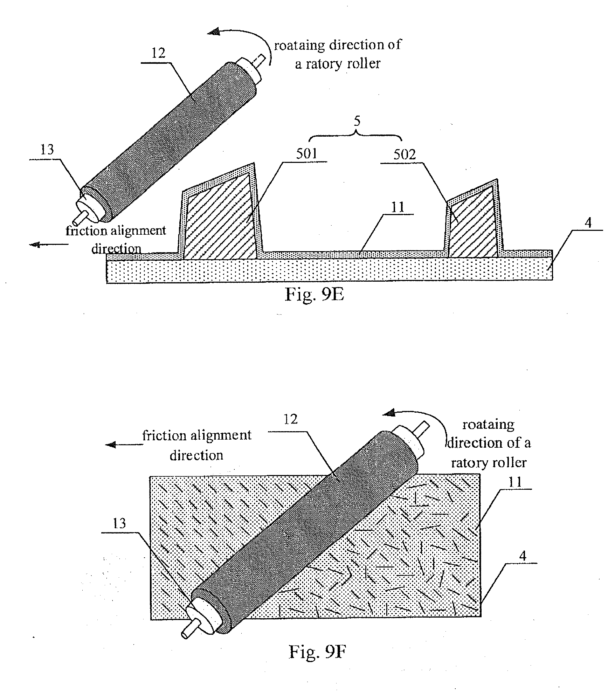

As illustrated in Fig. 9E, after the alignment layer 11 is formed, the friction alignment process is performed on the alignment layer 11. For example, a high-speed rotary roller 13 wrapped by a friction cloth 12 with a special treated surface is used for friction. For example, a position of the high-speed rotary roller 13 remains unchanged, the base substrate provided with the columnar spacers 5 and the alignment layer 11 is conveyed to the high-speed rotary roller 13, and the alignment layer 11 mechanically contacts the surface of the friction cloth 12 and is rubbed by the surface of the friction cloth 12, thus directional grooves illustrated in Fig. 9F are carved on the surface of the alignment layer 11. The base substrate provided with the columnar spacers 5 and the alignment layer 11 is conveyed to the high-speed rotary roller 13, and the friction direction is opposite to the alignment direction of the alignment layer. The friction cloth 12 first contacts a left end of each of the columnar spacers 5 illustrated in Fig. 9E, slides over the sloping surface of each of the columnar spacers 5 from a lower end, which is lower relative to the base substrate, of the sloping surface to a higher end, which is higher relative to the base substrate, of the sloping surface, and leaves from a right end of each of the columnar spacers 5 as illustrated in Fig. 9E. In this way, a smooth transition is achieved during the friction cloth 12 slides over the sloping surface of each of the columnar spacers 5, so that the deformation of the fibers on the surface of the friction cloth is small and the shape recovery time of the fibers is short. Thus, in a case where the friction cloth 12 which has contacted the alignment layer 11 covering the columnar spacers 5 rotates to the region behind at least one of the columnar spacers 5 and contacts the region behind the at least one of the columnar spacers 5, the fibers on the surface of the friction cloth 12 return to a relatively regular state in time, thus the alignment layer 11 in the region behind the at least one of the columnar spacers 5 is normally rubbed by the fibers. In this way, the friction effect in the region behind the at least one of the columnar spacers 5 is not affected, a large deformation of the fibers on the surface of the friction cloth 12 after being blocked by the columnar spacers 5 is avoided, thus a problem that the deformed fibers rotating to the region do not return to the regular state so that some positions behind the at least one of the columnar spacers 5 are not rubbed or friction traces in the region are shallow is avoided, thus a problem that a bad initial alignment of the liquid crystal molecules at the positions is avoided, and thus a poor display effect of the display device in a dark state caused by the bad initial alignment of the liquid crystal molecules is avoided.

For example, the friction cloth 12 used for the friction alignment is a cotton cloth being specially treated, a nylon cloth or a blended cloth which are being specially treated. For example, the friction cloth 12 is the cotton cloth or the nylon cloth which are treated with a fluffing agent. Specific types of the friction cloth may be determined according to properties of various materials. The surface of the friction cloth may be treated according to a required fineness of alignment grooves to change a density or a friction strength of the fibers on the surface of the friction cloth. For example, the surface of the friction cloth is treated with the fluffing agent or a reinforcement treatment. In addition, a strength of a friction force may be designed according to a required depth of the alignment grooves. No limitation is imposed to these.

What have been described above are only specific implementations of the present disclosure, the protection scope of the present disclosure is not limited thereto. The protection scope of the present disclosure should be based on the protection scope of the claims.

## Claims

1. A display substrate, comprising:
a base substrate and a plurality of spacers on the base substrate;
wherein each of the plurality of spacers has an end facing away from the base substrate, and the end is provided with a sloping surface; and sloping directions of the sloping surfaces of the plurality of spacers are consistent with each other.

2. The display substrate according to claim 1, wherein at least one of the plurality of spacers is in a shape of a prism.

3. The display substrate according to claims 1 or 2, wherein the sloping surface of each of the plurality of spacers is a plane.

4. The display substrate according to any one of claims 1-3, further comprising:
an alignment layer on the base substrate and covering the base substrate and the plurality of spacers.

5. The display substrate according to any one of claims 1-4, wherein along a friction alignment direction of the alignment layer, a width, which is in a direction perpendicular to the friction alignment direction, of at least one end of the sloping surface decreases gradually.

6. The display substrate according to any one of claims 1-5, wherein a material of the plurality of spacers comprises a photoresist.

7. The display substrate according to any one of claims 1-6, wherein the plurality of spacers comprise a plurality of main spacers and a plurality of auxiliary spacers, and a height of each of the plurality of auxiliary spacers is less than a height of each of the plurality of main spacers.

8. The display substrate according to claim 7, wherein the heights of the plurality of main spacers are equal to each other, and the heights of the plurality of auxiliary spacers are equal to each other.

9. A display device comprising the display substrate according to any one of claims 1-8 and an opposite substrate, wherein the display substrate and the opposite substrate are opposite to each other, so that the plurality of spacers are sandwiched between the display substrate and the opposite substrate.

10. The display device according to claim 9, wherein the display substrate is a color filter substrate or an array substrate.

11. A manufacturing method of a display substrate, comprising:
providing a base substrate; and
forming a plurality of spacers on the base substrate, wherein each of the plurality of spacers has an end facing away from the base substrate, and the end is provided with a sloping surface; and sloping directions of the sloping surfaces of the plurality of spacers are consistent with each other.

12. The manufacturing method of the display substrate according to claim 11, wherein the forming the plurality of spacers comprises:
forming a photoresist layer on the base substrate;
performing a gray-tone photolithography process, wherein an exposure intensity in a partial exposure region corresponding to each of the plurality of spacers decreases gradually or increases gradually along a friction alignment direction of an alignment layer.

13. The manufacturing method of the display substrate according to claim 12, wherein the plurality of spacers are formed by using the photoresist layer.

14. The manufacturing method of the display substrate according to claim 12, wherein the plurality of spacers comprise a plurality of main spacers and a plurality of auxiliary spacers, the partial exposure region comprises a first partial exposure region corresponding to each of the plurality of main spacers and a second partial exposure region corresponding to each of the plurality of auxiliary spacers, and an exposure intensity in the first partial exposure region is different from an exposure intensity in the second partial exposure region.

15. The manufacturing method of the display substrate according to any one of claims 11-14, further comprising:
forming an alignment layer covering the base substrate and the spacers; and
performing a friction alignment process on the alignment layer, wherein a moving direction of the plurality of spacers relative to a friction device is same as the friction alignment direction of the alignment layer.
